# EUROPÄISCHE PATENTSCHRIFT

(11) **EP 1 493 324 B1**
(45) Veröffentlichungstag und Bekanntmachung des Hinweises auf die Patenterteilung: **13.09.2006**
(21) Anmeldenummer: 04015480.9
(22) Anmeldetag: 01.07.2004
(51) Int. Cl.: A01D 78/10

(54) **Heuwerbungsmaschine**
Haymaking machine
Machine de fenaison

(30) Priorität: 04.07.2003 DE 10330381
(43) Veröffentlichungstag der Anmeldung: 05.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Leifeling, Karl, Dipl.-Ing., 48477 Hörstel-Bevergern (DE); Spree, Christian, Dipl.-Ing., 49584 Fürstenau (DE)

(56) Entgegenhaltungen:
- EP-A- 0 224 667
- EP-A- 0 739 582
- EP-A- 0 749 680
- EP-A- 0 947 129
- DE-A- 2 157 591

## Beschreibung

Die Erfindung betrifft eine Heuwerbungsmaschine, insbesondere zum Zetten und Wenden, mit zumindest an einem Maschinenbalken angeordneten und über Stützräder auf dem Boden abgestützten Arbeitskreiseln, wobei der um im wesentlichen vertikale Schwenkachsen in eine Transportstellung parallel zur Fahrtrichtung schwenkbare Seitenteile aufweisende Maschinenbalken durch horizontale Schwenkachsen in Einzeltragbalken unterteilt ist.

Bekannt ist aus der DE 298 06 043 U1 eine Landmaschine, bei der mit Lauf- und Stützrädern versehene Seitenteile zur Verringerung der Arbeitsbreite nach hinten eingeschwenkt werden können. Das Umstellen der Lauf- und Stützräder von einer Betriebstellung in eine andere wird hierbei über ein vom Fahrersitz betätigbares Stellglied, realisiert. So können die Lauf- und Stützräder um 90° verschwenkt werden.

Da für den landwirtschaftlichen Markt immer größere Arbeitsbreiten und immer flexiblere Arbeitsmaschinen verlangt werden, gibt es bei der soeben beschriebenen Heuwerbungsmaschine erhebliche Nachteile.

Der Fahrer der Heuwerbungsmaschine muss selbständig darauf achten, daß er die Stützräder von einer Transport- in eine Arbeitsstellung verschwenkt. Somit muss der Fahrer bei der Umstellung von einer Transport- in eine Arbeitsposition der Heuwerbungsmaschine einen genau definierten Zeitplan einhalten, der sowohl Zeit als auch in einem besonderen Maße Aufmerksamkeit erfordert. Ein weiterer Nachteil bei dem beschriebenen Kreiselzettwender ist die Tatsache, daß lediglich zwei Betriebsstellungen vorwählbar und maximal ein Schwenkwinkel von 90° der Stützrädern erreicht werden kann.

Eine Heuwerbungs maschine mit den Merkmalen des Oberbegriffs von Anspruch 1 ist aus EP-A-0 224 667 bekannt. Hier weist ein Seitenteil ungelenkte Lanfräder auf, die über eine Koppelstange mit dem Querträger verbunden sind, so daß eine automatische Verschwenkung von des Arbeits- in die Transportstellung erfolgt.

Der Erfindung liegt die Aufgabe zugrunde, eine Heuwerbungsmaschine, insbesondere einen Kreiselzettwender zu schaffen, die/der eine große Arbeitsbreite besitzt und den Bediener der Heuwerbungsmaschine von seinen Aufgaben entlastet.

Gelöst wird diese Aufgabe durch eine Erfindung gemäß Anspruch 1. Diese Heuwerbungsmaschine zeichnet sich aus durch die Tatsache, daß alle Kreiselrechen auf die Seitenteile des Maschinenbalkens verteilt sind, wobei pro Seitenteil mindestens zwei gelenkte Stützräder vorhanden sind. Eine Steuerungsvorrichtung verschwenkt nach der Überführung der Seitenteile in ihre Transportstellung automatisch die Stützräder in Fahrtrichtung. Die so gekennzeichnete, erfindungsgemäße Heuwerbungsmaschine nimmt aufgrund der automatischen Steuerungsvorrichtung dem Fahrer einen Teil seiner Aufgaben ab und vereinfacht so die Handhabung der Heuwerbungsmaschine.

Eine Steuerungsvorrichtung verschwenkt nach der Überführung der Seitenteile aus einer Arbeits- in eine Transportstellung automatisch die Stützräder in Fahrtrichtung, bzw. vor der Überführung der Seitenteile aus einer Transport- in eine Arbeitsstellung quer zur Fahrtrichtung. Die so gekennzeichnete, erfindungsgemäße Heuwerbungsmaschine hat eine gegenüber dem Stand der Technik große Arbeitsbreite, nimmt aufgrund der automatischen Steuerungsvorrichtung dem Fahrer einen Teil seiner Aufgaben ab und vereinfacht so die Handhabung einer deutlich größeren Heuwerbungsmaschine.

Bei einer weiteren Ausgestaltung der Heuwerbungsmaschine gemäß der Erfindung können die Stützräder bezüglich einer in etwa vertikalen Schwenkachse innerhalb eines Lenkwinkelbereiches von mehr als 90° auf vorgebbare Lenkwinkel eingestellt werden und somit insbesondere durch eine aktiv unterstützte Kurvenfahrt einer in Transportstellung befindlichen Heuwerbungsmaschine deren Wendigkeit deutlich verbessern. Die üblicherweise im Stand der Technik vorhandene Verschwenkbarkeit der Stützräder um ca. 90° bedeutet demgegenüber eine deutliche Einschränkung in der Flexibilität einer solchen landwirtschaftlichen Nutzmaschine.

Ein weiterer Vorteil dieser erfindungsgemäßen Heuwerbungsmaschine liegt in der aktiven oder auch automatischen Einstellung von verschiedenen Winkeln für die Grenzstreuung. Auch hierdurch lässt sich die Heuwerbungsmaschine flexibler einsetzen.

Da die erfindungsgemäße Heuwerbungsmaschine in Transportstellung relativ lang ist, ist die Straßenlage durch jeweils zwei gelenkte Stützräder pro Maschinenbalken verbessert. Die übrigen an den Kreiselrechen bzw. Maschinenbalken angeordneten Räder sind dann nachlaufende Stützräder. Vorzugsweise ist bei einer ungeraden Anzahl von Stützrädern pro Maschinenseite und einer geraden Anzahl von gelenkten Stützrädern in Fahrtrichtung vor den gelenkten Stützrädern zumindest ein Stützrad mehr als dahinter. Dadurch wird bei dieser Art von gezogenen Heuwerbungsmaschinen eine erhöhte Fahrstabilität erreicht.

Die Heuwerbungsmaschine weist bevorzugt acht oder mehr Arbeitskreisel mit jeweils geringerem Kreiseldurchmesser auf. Hierdurch sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der vertikalen Schwenkachsen der beiden seitlichen Maschinenbalken so gewählt ist, dass das Abstandsmaß A zwischen den inneren Arbeitskreiseln in der Arbeitsstellung sich bei der Überführung der seitlichen Maschinenbalken in die Transportstellung vergrößert.

Weitere Vorteile der Erfindung ergeben sich aus den weiteren Unteransprüchen sowie den schematischen Zeichnungen. In den Zeichnungen zeigt:
- Fig. 1: eine Heuwerbungsmaschine in Arbeitsstellung gemäß der Erfindung mit einem vorgeordneten Schlepper,
- Fig. 2: eine Heuwerbungsmaschine in Transportstellung mit vorgeordnetern Schlepper, wobei sich die gelenkten Stützräder noch in Arbeitsstellung befinden,
- Fig. 3: eine Schaltbild der Steuerungsvorrichtung zum automatischen Verschwenken der Räder in die Transport-, bzw. Arbeitsstellung,
- Fig. 4: eine perspektivische Ansicht eines Teils der Heuwerbungsmaschine mit den in Fahrtrichtung geschwenkten, gelenkten Stützrädern.

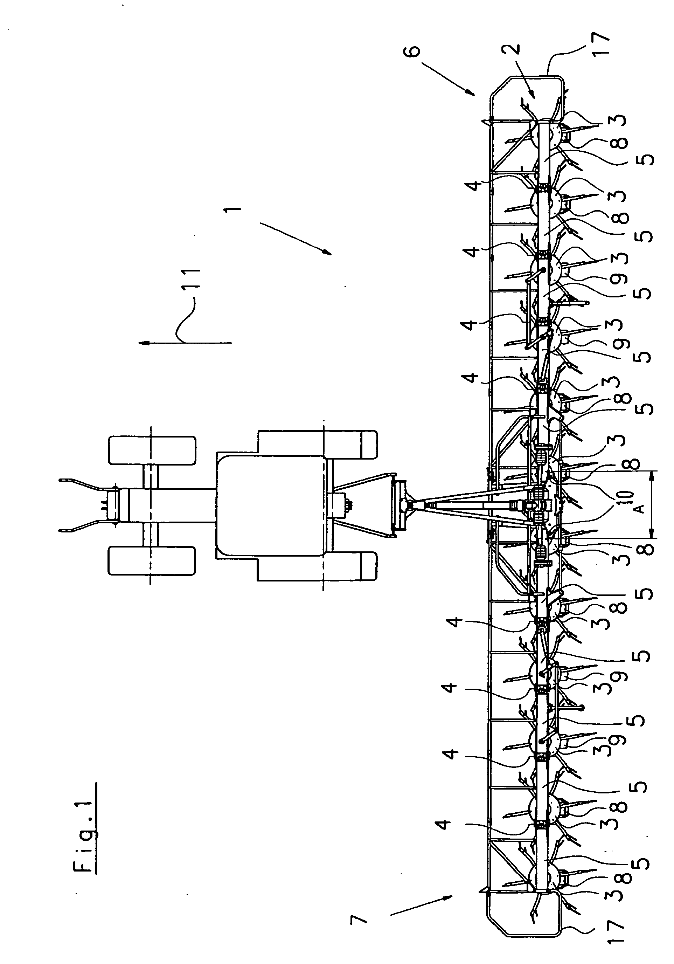

Fig. 1 zeigt einen nicht näher gekennzeichneten Schlepper, dem die Heuwerbungsmaschine 1 angehängt ist. Der Maschinenbalken 2, an dem die über Stützräder 8,9 abgestützten Arbeitskreisel 3 angebracht sind, ist durch horizontale Schwenkachsen 4 in Einzeltragbalken 5 unterteilt. Die rechten und linken Seitenteile 6 und 7 weisen bei dieser Ausführungsform der Erfindung jeweils sechs Arbeitskreisel 3 auf. Auf diese Art und Weise wird eine Arbeitsbreite von rund 13 m realisiert. Den Arbeitskreiseln 3 sind pro Seitenteil 6, 7 vier ungelenkte, nachlaufende Stützräder 8, sowie jeweils zwei gelenkte, weitere Stützräder 9 zugeordnet. Die gelenkten Stützräder 9 sind bei einer Heuwerbungsmaschine mit einer solch großen Arbeitsbreite, die sich dann auch in einer großen Längserstreckung des Fahrzeuges in Transportstellung niederschlägt, von großem Vorteil für die Fahrstabilität der gesamten Maschine.

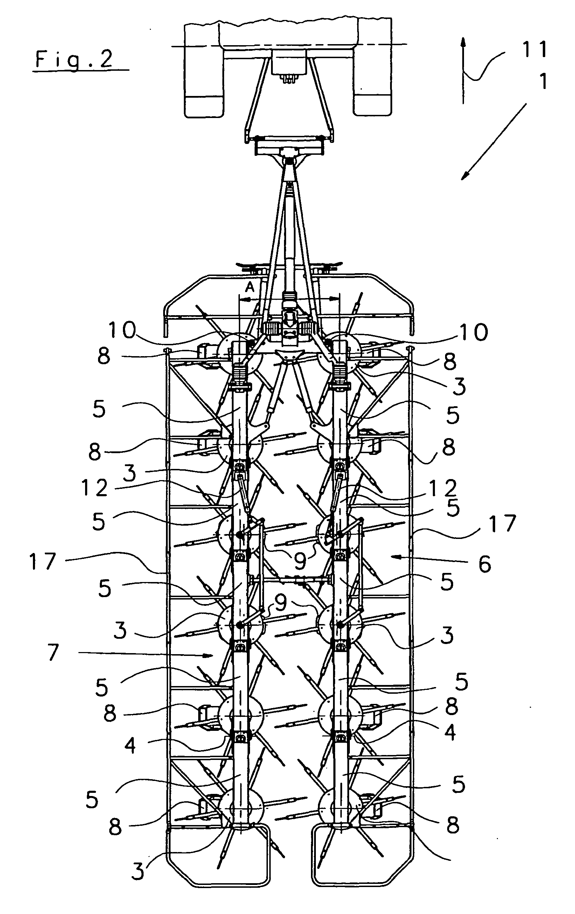

Zur Verschwenkung des Maschinenbalkens 2, bzw. seiner Seitenteile 6 und 7, in die Transportstellung werden die Seitenteile 6 und 7 um eine in etwa vertikale Achse 10 in eine Transportstellung parallel zur Fahrtrichtung 11 geschwenkt. Zur besseren Übersichtlichkeit sind in den Figuren nicht mehr alle identischen Einzelteile oder Einzelteile mit identischen Funktionen beziffert. Die nachlaufenden und ungelenkten Stützräder 8 stehen zu diesem Zeitpunkt, wie in Figur 2 dargestellt, genauso wie die nur geringfügig sichtbaren gelenkten Stützräder 9 in einer Stellung quer zur Fahrtrichtung 11.

Das Abstandsmaß A zwischen den Vertikalmittelachsen der beiden in Arbeitsstellung inneren Arbeitskreisel 3 (Fig.1) ist in der Transportstellung (Fig. 2) vergrößert.

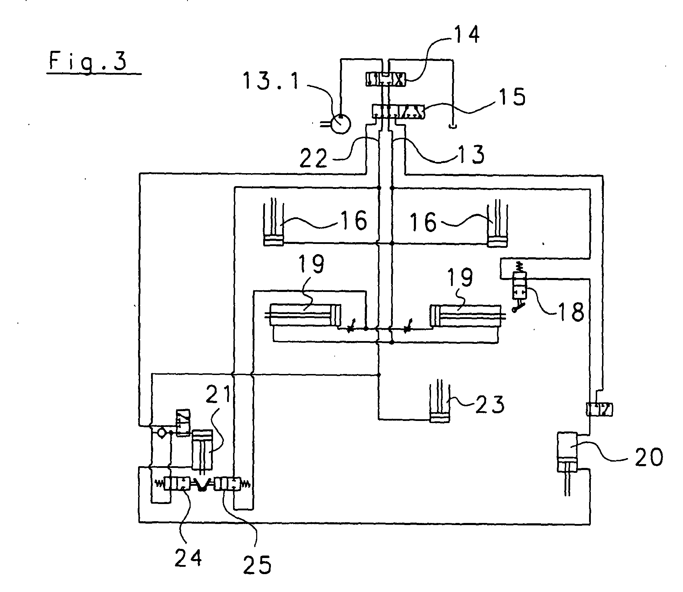

Aufgrund eines von einer Steuerungsvorrichtung ausgehenden Signals, z. B. einem erhöhten Öldruck, werden die gelenkten Stützräder 9 in eine Laufrichtung parallel zur Fahrt- und Transportrichtung 11 eingeschwenkt. Die das Steuerungssignal erhaltenden Stellmittel zur Verschwenkung der Stützräder 9 sind bei diesem Ausführungsbeispiel der Erfindung doppelt wirkende Hydraulikzylinder 12. Je nach Druckbeaufschlagung können diese Zylinder 12 automatisch die für eine Transport- oder Arbeitsstellung notwendige Kolbenposition erreichen (Fig. 3). Dem Bedienpersonal einer solchen Heuwerbungsmaschine 1 wird durch die automatische Umlenkung der Räder 9 Arbeit abgenommen, es kann seine Aufmerksamkeit auf die mit großer Arbeitsbreite ausgestattete Heuwerbungsmaschine 1 im Ganzen richten und somit in kürzerer Zeit als bislang mit seiner Arbeit fortfahren. Ein weiterer Vorteil des doppelt wirkenden Zylinders 12 ist die konstruktiv einfache Ausgestaltung des Stellmechanismusses, der gemäß dem Stand der Technik eine komplexere Anordnung von Zylinder mit zugehöriger Feder bedeutete.

Um eine für eine Transportfahrt deutlich verbesserte Spurstabilität zu erreichen, sind erfindungsgemäß pro Seitenteil 6, 7 in Transportstellung die gelenkten Stützräder 9 in der Mitte der bei diesem Ausführungsbeispiel insgesamt sechs vorhandenen Stützräder angebracht. Sollte es sich bei den an einem Seitenteil 6, 7 befindlichen Stützräder um eine ungerade Anzahl handeln, wobei die Anzahl der gelenkten Stützräder 9 gerade ist, so ist aus den selben Gründen die Anzahl der ungelenkten Stützräder 8 in Fahrtrichtung vor den gelenkten Stützrädern 9 größer als die der in Fahrtrichtung hinter den gelenkten Stützrädern 9 liegenden nachfolgenden und ungelenkten Stützrädern 8.

Der in Fig. 3 dargestellte Schaltplan offenbart die zum Erreichen der Transport- oder Arbeitsstellung notwendigen und jeweils gleichzeitig bzw. nacheinander ablaufenden Prozesse. Eine Druckbeaufschlagung der Leitung 13 mit Hilfe der Pumpe 13.1 und den entsprechenden Stellungen der Ventile 14 und 15 bewirkt zunächst einmal eine Beaufschlagung der Entriegelungszylinder 16. Hierdurch werden die nicht näher dargestellten Verriegelungen des in Fig. 1 dargestellten und in Arbeitsstellung befindlichen Zugstangenelements, bzw. der Rahmenteile 17 gelöst. Da das Ventil 18 bei ausgefahrenen Schwenkzylindern 19 in Sperrstellung steht, werden in diesem Fall die Schwenkzylinder 19 mit Druck beaufschlagt, so daß die beiden Seitenteile 6 und 7 aus der Arbeitsstellung in die Transportstellung verschwenkt werden. Sobald die Seitenteile 6, 7 die Transportstellung erreicht haben, erfolgt eine Umschaltung des Ventils 18 aus der Sperrstellung in einer Durchgangsstellung. Dadurch wird die Ölzufuhr zum Lenkzylinder 20 und nachfolgend zum Lenkzylinder 21, die beide dem Hydraulikzylinder 12 entsprechen, freigegeben. Somit sorgen die Lenkzylinder 20, 21 für eine Verschwenkung der Stützräder aus einer Arbeits- in eine Transportstellung.

Umgekehrt erfolgt die Verschwenkung der Seitenteile 6, 7 aus der Transportstellung in die Arbeitsteilung durch eine Druckbeaufschlagung der Leitung 22. Zunächst wird ein Entriegelungszylinder 23 zum Entriegeln der Transportverriegelung betätigt. Durch die gleichzeitige Druckbeaufschlagung des Lenkzylinders 21 mit dem nachfolgenden Lenkzylinder 20 werden die gelenkten Stützräder 9 in die Arbeitsstellung geschwenkt. Nachdem der Lenkzylinder 21 einen vorbestimmten Weg ausgefahren ist, wird über das Ventil 24 die Ölzufuhr zum Lenkzylinder 21 unterbrochen und über das angehängte Ventil 25 die Ölzufuhr zu den Schwenkzylindern 19 freigegeben. Somit werden die Seitenteile 6, 7 in die Arbeitsstellung der Heuwerbungsmaschine verschwenkt. Diese Schaltung gemäß der Erfindung vereinfacht die Handhabung der Heuwerbungsmaschine für das Bedienpersonal in erheblichem Umfang.

Bei einer weiteren Ausbildung einer Heuwerbungsmaschine gemäß der Erfindung sind die an sich bekannten Rahmenteile 17 als Zugstangenelement zur Aufnahme von in oder gegen die Fahrtrichtung auf den Maschinenbalken 2 wirkenden Kräften ausgebildet. Erfindungsgemäß sind die Enden der Lenkstange 26 über mit zumindest zwei Freiheitsgraden versehene Gelenke 27 mit den Hebelarmen 28 der in etwa vertikalen Schwenkachsen 29 der gelenkten Stützräder 9 verbunden. Die somit gemeinsam gelenkten Stützräder 9 stabilisieren sich daher gegenseitig. Die Gelenke 27 sind in Transportstellung in einer Flucht mit den horizontalen Schwenkachsen 4, was Vertikalbewegungen der Einzeltragbalken kompensiert und somit wiederum zu erhöhter Spurstabilität beiträgt. Gleichzeitig liegen die Gelenke 30 der Rahmenteile 17 auf den jeweils identischen horizontalen Schwenkachsen 4. Die bei der Straßenfahrt hohen Geschwindigkeiten zwischen 40 und 50 km/h führen trotz der Vertikalbewegungen der Einzeltragbalken 5 aufgrund der Gelenke 30 und 27 nicht zu Lenkausschlägen der Stützräder 9 und bilden somit eine für auch hohe Fahrgeschwindigkeiten geeignete Heuwerbungsmaschine 1.

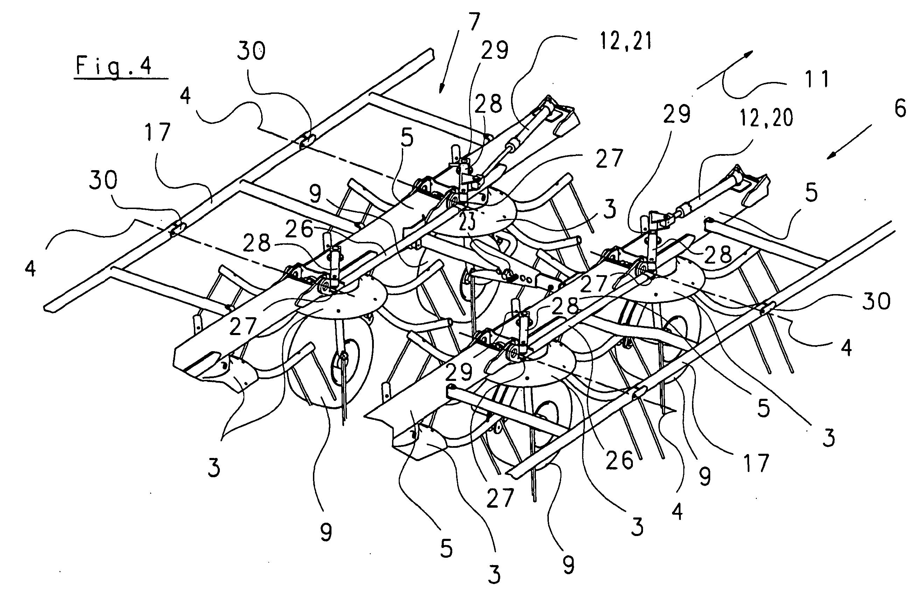

In Transportstellung stehen die gelenkten Räder 9, wie in Fig. 4 gezeigt, in einer zur Fahrtrichtung 11 parallelen Ausrichtung. Da pro Seitenteil jeweils zwei gelenkte Stützräder 9 gemeinsam angelenkt und Unebenheiten in der Fahrbahn, die ein Stützrad erfassen durch das andere Stützrad mit aufgefangen werden, erhöht sich durch die Kopplung zusätzlich die Stabilität der Heuwerbungsmaschine.

Somit ist eine Heuwerbungsmaschine geschaffen, die die Nachteile des Standes der Technik vermeidet und insbesondere eine große Arbeitsbreite bei besonders einfacher Bedienbarkeit gewährleistet.

## Patentansprüche

1. Heuwerbungsmaschine, insbesondere zum Zetten und Wenden, mit an einem Maschinenbalken (2) angeordneten und über Stützräder (8, 9) auf dem Boden abgestützten Arbeitskreiseln (3), wobei der um im wesentlichen vertikale Schwenkachsen (10) in eine Transportstellung parallel zur Fahrtrichtung schwenkbare Seitenteile (6, 7) aufweisende Maschinenbalken (2) durch horizontale Schwenkachsen (4) in Einzeltragbalken (5) unterteilt ist, wobei alle Arbeitskreisel (3) auf die Seitenteile (6, 7) verteilt sind, **dadurch gekennzeichnet, daß** ein Seitenteil (6,7) mindestens zwei gelenkte Stützräder (9) aufweist, wobei die gelenkten Stützräder (9) nach der Überführung der Seitenteile (6, 7) in ihre Transportstellung durch zumindest eine Steuerungsvorrichtung automatisch in Fahrtrichtung verschwenkbar sind.

2. Heuwerbungsmaschine nach Anspruch 1, **dadurch gekennzeichnet, daß** die gelenkten Stützräder (9) bezüglich einer in etwa vertikalen Schwenkachse (29) innerhalb eines Lenkwinkelbereiches von mindestens 90° auf vorgebbare Lenkwinkel einstellbar sind.

3. Heuwerbungsmaschine nach einem der Ansprüche 1 oder 2, **dadurch gekennzeichnet, daß** die gelenkten Stützräder (9) an einem Seitenteil gemeinsam angelenkt werden, wobei eine mit zumindest zwei Freiheitsgrade aufweisenden Gelenken (27) versehene Lenkstange (26) die Hebelarme (28) der gelenkten Stützräder (9) verbindet.

4. Heuwerbungsmaschine nach einem der Ansprüche 1 bis 3, **dadurch gekennzeichnet, daß** die gelenkten Stützräder (9) bezüglich einer in etwa vertikalen Schwenkachse (29) innerhalb eines Lenkwinkelbereiches von in etwa 110° auf vorgebbare Lenkwinkel einstellbar sind.

5. Heuwerbungsmaschine nach einem der Ansprüche 1 bis 4, **dadurch gekennzeichnet, daß** die Stellmittel zur Ansteuerung der aktiv gelenkten Stützräder doppelt wirkende Hydraulikzylinder (12, 20, 21) sind.

6. Heuwerbungsmaschine nach einem der Ansprüche 1 bis 5, **dadurch gekennzeichnet, daß** die gelenkten Stützräder (9) in der Transportstellung zur Unterstützung der Kurvenfahrt während der Transportfahrt aktiv lenkbar gehalten sind und im selben Drehsinn schwenkbar sind.

7. Heuwerbungsmaschine nach einem der Ansprüche 1 bis 6, **dadurch gekennzeichnet, daß** bei einer auf einem Seitenteil (6, 7) und in Fahrtrichtung hintereinander befindlichen ungeraden Anzahl von Stützrädern vor den zumindest zwei oder einer anderen geraden Anzahl von gelenkten Stützrädern (9) zumindest ein ungelenktes Stützrad (8) mehr vorhanden ist als dahinter.

8. Heuwerbungsmaschine nach einem der Ansprüche 1 bis 6, **dadurch gekennzeichnet, daß** bei einer auf einem Seitenteil (6, 7) in Fahrtrichtung hintereinander befindlichen geraden Anzahl von Stützrädern und einer geraden Anzahl von gelenkten Stützrädern (9) vor und hinter den Stützrädern (9) dieselbe Anzahl von ungelenkten Stützrädern (8) vorhanden ist.

9. Heuwerbungsmaschine nach einem der Ansprüche 3 bis 8, wobei der Maschinenbalken (2) in Fahrtrichtung vor- und seitlich nebengeordnete Rahmenteile (17) aufweist, **dadurch gekennzeichnet, daß** die Rahmenteile (17) als Zugstangenelement zur Aufnahme von in oder gegen die Fahrtrichtung auf den Maschinenbalken (2) wirkenden Kräften ausgebildet sind, wobei mit zumindest zwei Freiheitsgraden versehene Gelenke (27) der Lenkstange (26) der gemeinsam gelenkten Stützräder (9) in Transportstellung in einer Flucht mit jeweils einer horizontalen Schwenkachse (4) und jeweils einem die einzelnen Rahmenteile (17) verbindenden Gelenke (30) liegen.

10. Heuwerbungsmaschine nach einem der Ansprüche 1 bis 9, **dadurch gekennzeichnet, daß** die gelenkten Stützräder (9) vor der Überführung der Seitenteile (6,7) in ihre Arbeitsstellung durch zumindest eine Steuerungsvorrichtung automatisch in die in etwa quer zu der Längserstreckung der Seitenteile (6,7) ausgerichteten Arbeitsstellung verschwenkbar sind.

## Claims

1. Haymaking machine, particularly for turning, having working rotors (3) which are arranged on a machine bar (2) and which are supported on the ground by means of supporting wheels (8, 9), the machine bar (2), which has side portions (6, 7) able to be pivoted about substantially vertical axes of pivot (10) to a position for transport parallel to the direction of travel, being divided into individual carrier bars (5) by horizontal axes of pivot (4), all the working rotors (3) being distributed over the side portions (6, 7), **characterised in that** a side portion (6, 7) has at least two steered supporting wheels (9), the steered supporting wheels (9) being able to be pivoted automatically into the direction of travel by at least one control arrangement after the side portions (6, 7) have been transferred to their position for transport.

2. Haymaking machine according to claim 1, **characterised in that** the steered supporting wheels (9) can be set to presettable steering angles within a range of steering angles of at least 90° about an approximately vertical axis of pivot (29).

3. Haymaking machine according to either of claims 1 and 2, **characterised in that** the steered supporting wheels (9) steered on a side portion in unison, a steering bar (26) provided with joints (27) having at least two degrees of freedom connecting the lever arms (28) of the steered supporting wheels (9).

4. Haymaking machine according to one of claims 1 to 3, **characterised in that** the steered supporting wheels (9) can be set to presettable steering angles within a range of steering angles of approximately 110° about an approximately vertical axis of pivot (29).

5. Haymaking machine according to one of claims 1 to 4, **characterised in that** the positioning means for actuating the actively steered supporting wheels are double-acting hydraulic cylinders (12, 20, 21).

6. Haymaking machine according to one of claims 1 to 5, **characterised in that** in the position for transport the steered supporting wheels (9) are held in such a way as to be actively steerable, and are pivotable in the same direction of rotation, to assist travel through curves or bends during travel for transport purposes.

7. Haymaking machine according to one of claims 1 to 6, **characterised in that**, where there are an odd number of supporting wheels situated on a side portion (6, 7) one behind the other in the direction of travel, there is at least one more unsteered supporting wheel (8) in front of the at least two, or some other even number of, steered supporting wheels (9) than behind them.

8. Haymaking machine according to one of claims 1 to 6, **characterised in that** where there are an even number of supporting wheels situated on a side portion (6, 7) one behind the other in the direction of travel and an even number of steered supporting wheels (9), there are the same number of unsteered supporting wheels (8) in front of and behind the supporting wheels (9).

9. Haymaking machine according to one of claims 3 to 8, wherein the machine bar (2) has frame parts (17) associated with it at the front and at sides in the direction of travel, **characterised in that** the frame parts (17) are in the form of a drawbar member to absorb forces acting on the machine bar (2) in, or in the opposite direction to, the direction of travel, joints (27), provided with at least two degrees of freedom, on the steering bar (26) of the supporting wheels (9) which are steered in unison each being in line, in the position for transport, with a horizontal axis of pivot (4) and with a joint (30) which connects the individual frame parts (17).

10. Haymaking machine according to one of claims 1 to 9, **characterised in that**, before the side portions (6, 7) are transferred to their working position, the steered supporting wheels (9) can be pivoted automatically by at least one control arrangement into the working position, which is orientated approximately transversely to the longitudinal dimension of the side portions (6, 7).

## Revendications

1. Machine de fenaison notamment pour étaler et retourner les produits, comportant des rotors (3) s'appuyant sur le sol par des roues de sustentation (8, 9) et installées sur une poutre (2),
la poutre (2) de la machine ayant des parties latérales (6, 7), qui pivotent dans une direction de transport parallèlement à la direction de déplacement autour d'axes de pivotement (10) essentiellement verticaux, et qui sont subdivisées par des axes de pivotement (4) horizontaux, en poutres séparées (5),
tous les rotors (3) étant répartis entre les parties latérales (6, 7),
**caractérisée en ce que**
une partie latérale (6, 7) comporte au moins deux roues de sustentation (9), guidées,
les roues de sustentation (9), guidées, sont basculées automatiquement dans leur position de transport, par au moins un dispositif de commande.

2. Machine de fenaison selon la revendication 1,
**caractérisée en ce que**
les roues de sustentation (9) guidées, sont réglables suivant des angles de braquage prédéfinis dans une plage d'au moins 90°, par rapport à leur axe (29) sensiblement vertical.

3. Machine de fenaison selon l'une des revendications 1 ou 2,
**caractérisée en ce que**
les roues de sustentation (9), guidées, sont articulées en commun sur une partie latérale et une tige de direction (26), munie d'articulations (27) ayant au moins deux degrés de liberté, relie les bras de levier (28) des roues de sustentation (9), guidées.

4. Machine de fenaison selon l'une des revendications 1 à 3,
**caractérisée en ce que**
les roues de sustentation (9), guidées, sont réglables par rapport à un axe sensiblement vertical (29) dans une plage d'angle de braquage de l'ordre de 110° suivant un angle de braquage prédéfini.

5. Machine de fenaison selon l'une des revendications 1 à 4,
**caractérisée en ce que**
les moyens de réglage pour commander les roues de sustentation guidées de manière active sont des vérins hydrauliques à double effet (12, 20, 21).

6. Machine de fenaison selon l'une des revendications 1 à 5 ?
**caractérisée en ce que**
les roues de sustentation (9), guidées, sont tenues de manière guidée active en position de transport pour assister le déplacement en courbe pendant le transport et pivotent dans le même sens de rotation.

7. Machine de fenaison selon l'une des revendications 1 à 6,
**caractérisée en ce que**
pour un nombre impair de roues de sustentation d'une partie latérale (6, 7), qui se suivent dans la direction de déplacement, avant au moins deux roues ou un nombre pair de roues de sustentation (9), guidées, il y a au moins une roue de sustentation (8), non guidée, de plus que le nombre de roues derrière.

8. Machine de fenaison selon l'une des revendications 1 à 6,
**caractérisée en ce que**
pour un nombre pair de roues de sustentation qui se suivent dans la direction de déplacement sur une partie latérale (6, 7) et un nombre pair de roues de sustentation, guidées, (9) qui se trouvent devant et derrière les roues de sustentation (9), on a le même nombre de roues de sustentation non guidées (8).

9. Machine de fenaison selon l'une des revendications 3 à 8 dont la poutre (2) comporte des parties de châssis (17) auxiliaires avant et latérales, dans la de déplacement,
**caractérisée en ce que**
les parties de châssis (17) sont des éléments de barre de traction pour recevoir les efforts agissant sur la poutre (2) de la machine dans la direction de déplacement ou dans la direction opposée,
des articulations (27) de la tige de direction (26) des roues de sustentation (9) articulées en commun, ayant au moins deux degrés de liberté sont alignées dans la direction de transport avec chaque fois un axe de pivotement horizontal (4) et chaque fois une articulation (30) reliant les parties de cadre (17).

10. Machine de fenaison selon l'une des revendications 1 à 9,
**caractérisée en ce que**
les roues de sustentation (9), guidées, avant le transfert des parties latérales (6, 7) dans leur position de travail sont basculées automatiquement par au moins un dispositif de commande, dans la position de travail et alignées sensiblement transversalement à l'extension longitudinale des parties latérales (6, 7)
